# EUROPEAN PATENT SPECIFICATION

(11) **EP 3 136 655 B1**
(45) Date of publication and mention of the grant of the patent: **11.09.2019**
(21) Application number: 14892448.3
(22) Date of filing: 19.05.2014
(51) Int. Cl.: G06F 3/0482, H04L 29/06, H04N 21/414, H04N 21/436, H04N 21/44, H04L 29/08, G06F 16/438, G06F 16/44

(54) **MULTIMEDIA DISPLAY METHOD, DEVICE AND EQUIPMENT**
MULTIMEDIAANZEIGEVERFAHREN, -VORRICHTUNG UND -AUSRÜSTUNG
PROCÉDÉ, DISPOSITIF, ET ÉQUIPEMENT D'AFFICHAGE MULTIMÉDIA

(43) Date of publication of application: 01.03.2017
(60) Divisional application: 19188372.7
(73) Proprietor: Huawei Technologies Co., Ltd., Longgang District Shenzhen, Guangdong 518129 (CN)
(72) Inventor: QIN, Yirong, Shenzhen Guangdong 518129 (CN); CHEN, Minjiang, Shenzhen Guangdong 518129 (CN)
(74) Representative: Epping - Hermann - Fischer
(86) International application number: PCT/CN2014/077772
(87) International publication number: WO 2015/176202

(56) References cited:
- EP-A2- 1 414 042
- WO-A2-2005/125207
- CN-A- 101 193 079
- CN-A- 103 210 388
- KR-A- 20130 110 660
- US-A1- 2006 010 167

## Description

### TECHNICAL FIELD

The present invention relates to the field of electronic information technologies, and in particular, to a multimedia display method, apparatus, and device.

### BACKGROUND

Currently, an in-car system based on an Android platform is already very popular. Generally, the in-car system can play only existent multimedia files in the in-car system. In order to widen the range of multimedia files that can be played by the in-car system and enable the in-car system to play multimedia files in other service devices, for example, use the in-car system to play a multimedia file in a mobile phone, and in order to enable the in-car system to play multimedia files in service devices such as a mobile phone, a DLNA (Digital Living Network Alliance, Digital Living Network Alliance) technology in which a DLNA service device collaborates with a DLNA in-car system to play multimedia files in service devices such as a mobile phone by using the in-car system is generally applied in the prior art. The DLNA in-car system displays multimedia type information. After receiving a multimedia type selection command of a user, the DLNA in-car system displays DLNA service devices that are searched out. After receiving a DLNA service device selection command of the user, the DLNA in-car system displays a catalog directory in a selected DLNA server, for example, a catalog directory based on path, based on artist, or based on album. After receiving a catalog directory selection command of the user, the DLNA in-car system displays a multimedia file list in the catalog directory. The DLNA in-car system receives a multimedia file selection command of the user, and selects and plays a multimedia file in the multimedia file list.

However, in the prior art, more than one DLNA service device generally exists in a covered by a wireless network of the DLNA in-car system. Before accessing the DLNA service device, the DLNA in-car system does not know which multimedia files exist in the DLNA service device. If a DLNA service device includes no multimedia file desired by the user, the DLNA in-car system needs to return to an interface that displays the DLNA service device list and accesses another DLNA service device, receives a catalog directory selection command and then a multimedia file selection command of the user again, and selects and plays a multimedia file. In a case in which multiple DLNA service devices exist, the DLNA in-car system needs to access the DLNA service devices repeatedly. Every time a DLNA service device is accessed, multiple commands of the user need to be received before the desired multimedia file can be played. It takes a long time for the DLNA in-car system to search for the multimedia file, which reduces efficiency of searching for the multimedia file.
US 2006/0010167 A1 provides an apparatus for navigation of multimedia content in a vehicle multimedia system having an embedded database of multimedia files. A navigation interface for controlling playback of the multimedia files includes a processing unit, an input unit coupled to the processing unit, and a display coupled to the processing unit. The processing unit is configured to couple with the embedded database, determine a playback frequency for each of the multimedia files, and generate a playlist of multimedia files based on the playback frequency. The input unit is configured to initiate playback of the playlist. The display is configured to display the playlist.
EP 1 414 042 A2) relates to grouping and navigating media files within a playlist on a computer-readable medium. Software according to the invention selects one or more media files according to a grouping criterion to define a group from the media files. The defined group references the selected media files. The invention software generates a group header associated with the group. The group header includes a value identifying the defined group and a reference to another group to enable navigation. The invention software stores the selected media files, the playlist, the defined groups, and the associated group headers on a computer-readable medium.

### SUMMARY

Embodiments of the present invention provide a multimedia display method and device, which can reduce time spent by user equipment in searching for a multimedia file and improve efficiency of searching for the multimedia file.

To achieve the foregoing objective, the embodiments of the present invention use the technical solutions as defined in the attached claims.

In an example, a user equipment can receive a multimedia type selection command, search for a service device in a specified range, determine a service device accessible with access permission, search the service device accessible with access permission for a multimedia file corresponding to the multimedia type selection command, and generate and display a multimedia file list according to the multimedia file corresponding to the multimedia type selection command. In the prior art, a DLNA service device needs to be accessed repeatedly, and every time the DLNA service device is accessed, multiple commands of a user need to be received before a required multimedia file can be played. Compared with the prior art, in this solution, after receiving a multimedia type selection command, the user equipment traverses and accesses all found service devices accessible with access permission, generates and displays a multimedia file list according to a multimedia file that is corresponding to the multimedia type selection command and is in the service device, and displays found multimedia files at a time, thereby avoiding a problem of accessing the DLNA service device repeatedly, avoiding a need of receiving multiple commands of the user every time the DLNA service device is accessed, reducing time spent by the user equipment in searching for a multimedia file and, improving efficiency of searching for the multimedia file.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a multimedia display method according to an embodiment of the present invention;
FIG. 2a is a schematic diagram of an interface displayed by user equipment in the prior art;
FIG. 2b is a schematic diagram of an interface displayed by user equipment according to an embodiment of the present invention;
FIG. 3 is a flowchart of a multimedia display method according to another embodiment of the present invention;
FIG. 3a is a schematic diagram of an example of a file directory according to another embodiment of the present invention;
FIG. 4 is a flowchart of a multimedia display method according to another embodiment of the present invention;
FIG. 4a is a schematic diagram of an example of a file directory according to another embodiment of the present invention;
FIG. 5 is a flowchart of a multimedia display method according to another embodiment of the present invention;
FIG. 6 is a schematic structural diagram of a multimedia display apparatus according to an embodiment of the present invention;
FIG. 7 is a schematic structural diagram of a multimedia display apparatus according to another embodiment of the present invention;
FIG. 8 is a schematic structural diagram of a multimedia display apparatus according to another embodiment of the present invention;
FIG. 9 is a schematic structural diagram of a multimedia display apparatus according to another embodiment of the present invention; and
FIG. 10 is a schematic structural diagram of a multimedia display device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The technical solution provided in the embodiments of the present invention is applied to user equipment. The user equipment may communicate with a service device accessible with access permission, and the service device stores a multimedia file. There may be multiple service devices, and the user equipment may acquire a multimedia file from the service device and plays it on the user equipment. The user equipment may be an in-car system on which a DLNA (Digital Living Network Alliance, Digital Living Network Alliance) client is installed or another device that can communicate with the service device. The service device may be a mobile phone, a tablet computer, a notebook computer, and the like. The user equipment and the service device may communicate by using a wireless communication technology such as Wi-Fi (wireless local area network), Bluetooth, or the like.

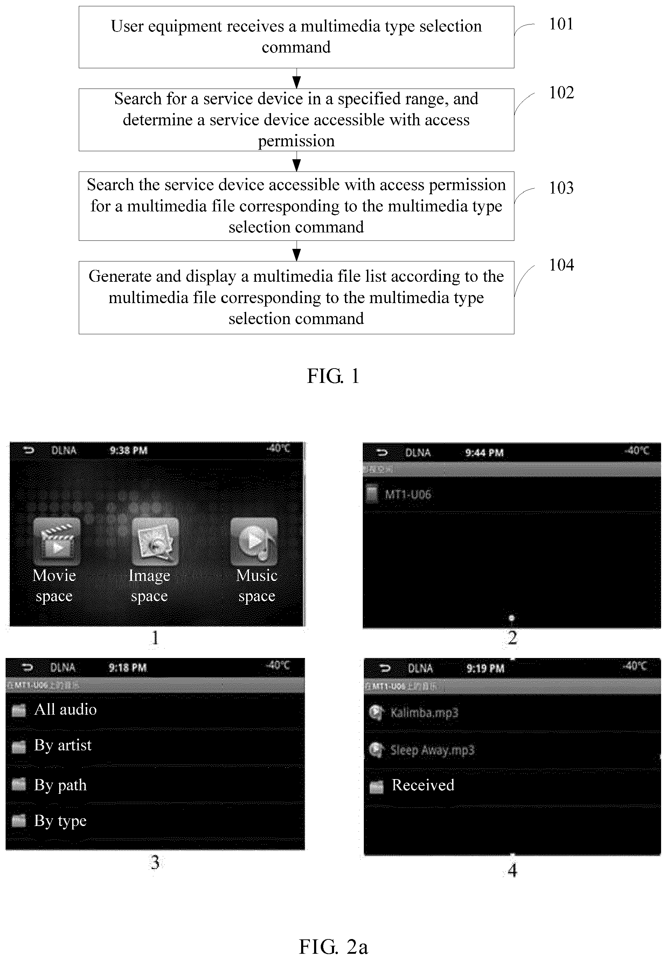

An embodiment of the present invention provides a multimedia display method, as shown in FIG. 1, the method includes:
101. User equipment receives a multimedia type selection command.

The multimedia type selection command is used to select a multimedia type, and the multimedia type selection command may be set and sent by a user. For example, the user equipment displays three types of multimedia file icons: music, movie, and image. The user sends a multimedia type selection command to select a music icon, and therefore, the user equipment receives the multimedia type selection command that is used to select a music multimedia file.

102. Search for a service device in a specified range, and determine a service device accessible with access permission.

The service device stores a multimedia file. Receiving a multimedia type selection command is a condition of triggering search for a service device. After receiving the multimedia type selection command, the user equipment starts to search for a service device in a specified range. The user equipment searches for the service device in the specified range, where the specified range may be a range in which the user equipment can communicate with the service device, for example, a range covered by a wireless local area network connected to the user equipment; and the specified range may also be a distance range set by the user, for example, a range in a circle with a center at the user equipment and a radius equal to 5 meters.

It should be noted that the user equipment may search out multiple service devices, and needs to determine a service device accessible with access permission. For example, the user equipment is an in-car system, and the in-car system searches out a mobile phone A, a mobile phone B, and a tablet computer C. The mobile phone A, the mobile phone B, and the tablet computer C are all service devices; however, only the mobile phone A and the tablet computer C have matching clients installed on them and are accessible with access permission, and therefore, the in-car system can access only the mobile phone A and the tablet computer C.

103. Search the service device accessible with access permission for a multimedia file corresponding to the multimedia type selection command.

The user equipment searches the service device accessible with access permission for a multimedia file corresponding to the multimedia type selection command. For example, multimedia files stored in the service devices include a music file, a video file, an image file, and the like. The multimedia type selection command selects a music file, and therefore, all music files in the found service device accessible with access permission are acquired from the found service device accessible with access permission. When searching the service device accessible with access permission for the multimedia file corresponding to the multimedia type selection command, the user equipment may successively perform the search in multiple service devices accessible with access permission, or may concurrently perform the search in the multiple service devices accessible with access permission to further improve search efficiency. The user equipment and the service device may also communicate and exchange data and messages by using a UPNP (Universal Plug and Play, Universal Plug and Play) protocol.

104. Generate and display a multimedia file list according to the multimedia file corresponding to the multimedia type selection command.

The multimedia list includes name information of the multimedia file corresponding to the multimedia type selection command. For example, when the multimedia list is generated and displayed, the user equipment does not download the multimedia file that is corresponding to the multimedia type selection command and is in the service device into the user equipment. For example, the multimedia type selection command instructs to select a video file, and therefore, the multimedia list displayed by the user equipment includes name information of video files in all service devices accessible with access permission. The multimedia list includes at least the name information of the multimedia file, and may further include other information such as an album or author of the multimedia file. There are multiple types for the multimedia file, such as a music file, an image file, and a video file.

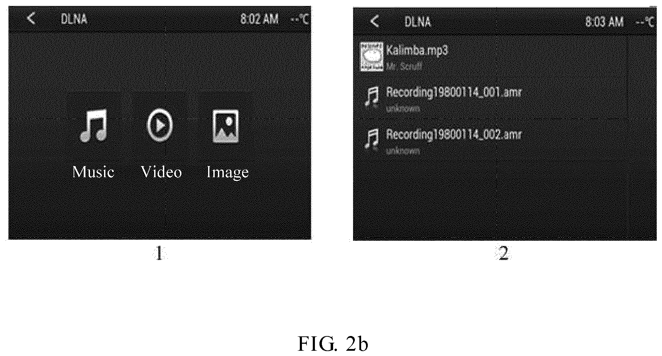

Specifically, in the prior art, as shown in FIG. 2a, an operation command of a user is received, and user equipment needs to display successively four interfaces numbered 1-4. The interface numbered 1 is a multimedia type selection interface, the interface numbered 2 is a service device selection interface, the interface numbered 3 is a directory type selection interface, and the interface numbered 4 is a multimedia file list interface. When one service device is accessed, the user equipment needs to receive an operation command four times before a multimedia file desired for playing can be selected on the multimedia file list interface. If a user terminal accesses N service devices successively, the user equipment needs to receive the operation command 4^{∗}N times and perform an operation 4^{∗}N times. However, in this solution, as shown in FIG. 2b, the user equipment needs only to display successively two interfaces numbered 1 and 2. The interface numbered 1 is a multimedia type selection interface, and the interface numbered 2 is a multimedia file list interface. The user equipment needs to receive the operation command only two times before the multimedia file desired for playing can be selected on the multimedia file list interface. Even if the user equipment accesses multiple service devices, because selection of the service device is not required, the user equipment still needs to receive the operation command only two times before the multimedia file desired for playing can be selected on the multimedia file list interface.

In the multimedia display method provided in this embodiment of the present invention, user equipment can receive a multimedia type selection command, search for a service device in a specified range, determine a service device accessible with access permission, search the service device accessible with access permission for a multimedia file corresponding to the multimedia type selection command, and generate and display a multimedia file list according to the multimedia file corresponding to the multimedia type selection command. In the prior art, a DLNA service device needs to be accessed repeatedly, and every time the DLNA service device is accessed, multiple commands of a user need to be received before a required multimedia file can be played. Compared with the prior art, in this solution, after receiving a multimedia type selection command, the user equipment traverses and accesses all found service devices accessible with access permission, generates and displays a multimedia file list according to a multimedia file that is corresponding to the multimedia type selection command and is in the service device, and displays found multimedia files at a time, thereby avoiding a problem of accessing the DLNA service device repeatedly, avoiding a need of receiving multiple commands of the user every time the DLNA service device is accessed, reducing time spent by the user equipment in searching for a multimedia file, and improving efficiency of searching for the multimedia file.

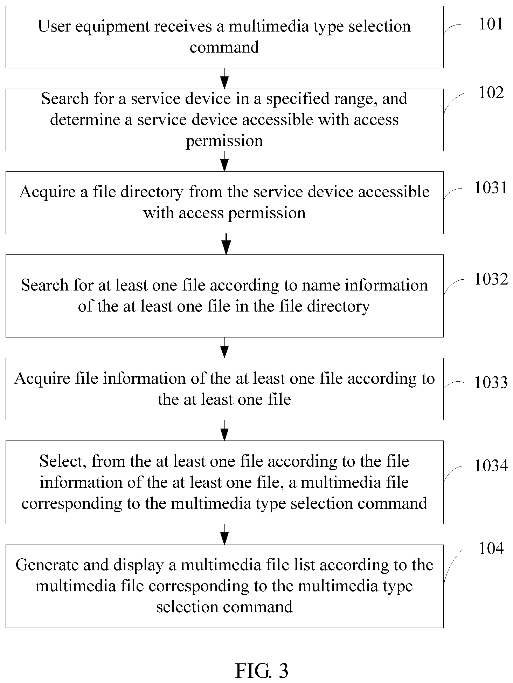

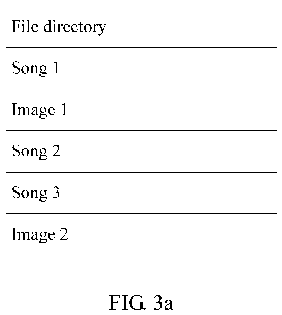

Further, on the basis of the solution shown in FIG. 1, another embodiment of the present invention further provides a specific solution to a multimedia display method. This solution gives more details about an execution process of 103 in the solution shown in FIG. 1, where 103 may be specifically implemented by 1031 to 1033, and as shown in FIG. 3, may include:
1031. Acquire a file directory from the service device accessible with access permission.

In specific application of this embodiment, the service device may use a file directory to display files stored in the service device, where the file directory includes name information of at least one file in the service device, and the file may include a multimedia file and may further include a file of another type, such as an executable program file and a text file. For example, as shown in FIG. 3a, the file directory includes name information of five files which are separately "song 1", "image 1", "song 2", "song 3", and "image 2". The user equipment acquires a file directory from the service device accessible with access permission. The file directory is essentially an index that is of files in the service device and is created by the service device. That is, the index is a mapping relationship between name information of a file and a physical location of the file. Each file in the service device has a corresponding entry in the file directory. The entry includes at least the name information of the file, and may further include information such as an internal identifier of the file, a file type, a file storage address, a file length, access permission, creation time, and access time. A corresponding file may be found in a physical memory according to the name information of the file in the file directory.

1032. Search for at least one file according to name information of the at least one file in the file directory.

A physical memory of the service device may be searched for a corresponding file according to the name information of the file in the file directory in the service device.

1033. Acquire file information of the at least one file according to the at least one file.

The file information of the at least one file is used to distinguish a type of the at least one file. According to the found file, the file information of the file may be acquired by using a property of the file. The file information is used to distinguish the file type. The file information may be file format information such as txt (Text File, text file), avi (Audio Video Interleaved, audio video interleaved), MP3 (Moving Picture Experts Group Audio Layer III, moving picture experts group audio layer III), and GIF (Graphics Interchange Format, graphics interchange format). The file information may also be identification information that identifies a multimedia file type. For example, the user equipment and the service device pre-agrees to set identification information that identifies a multimedia file type, uses a character A to identify a music file, uses a character B to identify an image file, and uses a character C to identify a video file.

1034. Select, from the at least one file according to the file information of the at least one file, a multimedia file corresponding to the multimedia type selection command.

According to the file information of at least one file, the user equipment may determine a type of the file; and therefore, selects the multimedia file that is corresponding to the multimedia type selection command and is in plenty of files in the service device. For example, the files stored in the service device include a text file, an image file, a video file, a music file, and the like. When the file information is file format information, the multimedia type selection command instructs to select a video file, and therefore, file format information of all files in the service device is acquired. The service device stores files whose file format information is txt (Text File, text file), avi (Audio Video Interleaved, audio video interleaved) files, MP3 (Moving Picture Experts Group Audio Layer III, moving picture experts group audio layer III) files, FLV (Flash Video, a streaming media format) files, and GIF (Graphics Interchange Format, graphics interchange format) files. The files whose file format information is avi and FLV are video files, and therefore, the user equipment selects files whose file format information is avi and FLV in all files.

In the multimedia display method provided in this embodiment of the present invention, user equipment can receive a multimedia type selection command; search for a service device in a specified range; determine a service device accessible with access permission, acquire a file directory from the service device accessible with access permission, and therefore, acquire file information of a file in the service device; select a multimedia file corresponding to the multimedia type selection command by using the file information; and generate and display a multimedia file list according to the multimedia file corresponding to the multimedia type selection command. In the prior art, a DLNA service device needs to be accessed repeatedly, and every time the DLNA service device is accessed, multiple commands of a user need to be received before a required multimedia file can be played. Compared with the prior art, in this solution, after receiving a multimedia type selection command, the user equipment traverses and accesses all found service devices accessible with access permission, generates and displays a multimedia file list according to a multimedia file that is corresponding to the multimedia type selection command and is in the service device, and displays found multimedia files at a time, thereby avoiding a problem of accessing the DLNA service device repeatedly, avoiding a need of receiving multiple commands of the user every time the DLNA service device is accessed, reducing time spent by the user equipment in searching for a multimedia file, and improving efficiency of searching for the multimedia file.

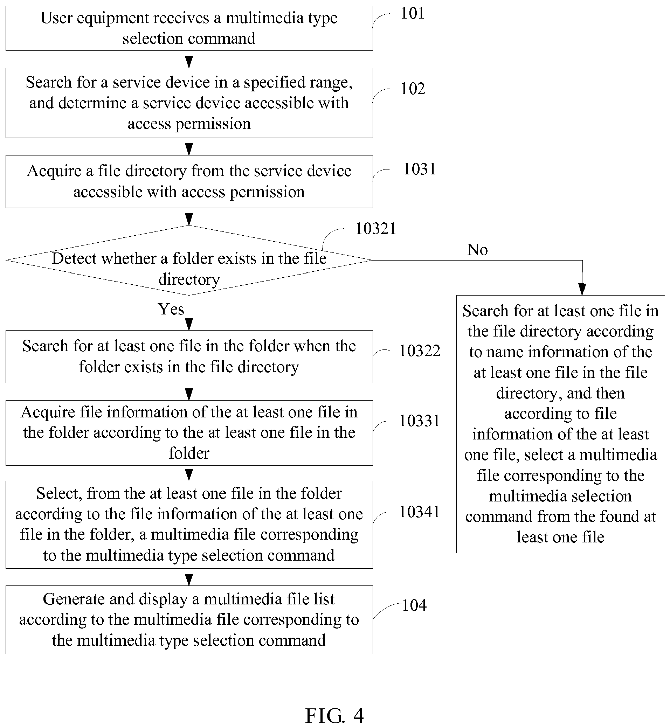

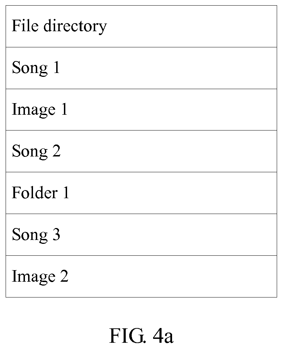

Still further, on the basis of the solution shown in FIG. 3, an embodiment of the present invention further provides a specific solution to a multimedia display method. This solution gives more details about an execution process of 1032 to 1034 in the solution shown in FIG. 3, where 1032 may be specifically implemented by 10321 to 10322, 1033 may be specifically implemented by 10331, and 1034 may be specifically implemented by 10341. As shown in FIG. 4, the implementation process includes:
10321. Detect whether a folder exists in the file directory.

A folder may still exist in the file directory, and the folder includes at least one file. In order to prevent omission of a multimedia file that is corresponding to the multimedia type selection command and is in the folder at the time of selecting the multimedia file corresponding to the multimedia type selection command, whether a folder exists in the file directory needs to be detected; and if a folder exists, the folder needs to be opened and at least one file in the folder needs to be selected.

10322. Search for at least one file in the folder when the folder exists in the file directory.

When a folder exists in the file directory, the folder is opened and at least one file in the folder is searched for. For example, as shown in FIG. 4a, the file directory includes not only name information of five files: "song 1", "image 1", "song 2", "song 3", and "image 2", but also a folder "folder 1", and therefore, the folder 1 is opened and a file in the folder 1 is searched for.

When no folder exists in the file directory, it is necessary only to search for at least one file in the file directory according to the name information of the at least one file in the file directory, and then according to the file information of the at least one file, select a multimedia file that is corresponding to the multimedia selection command and is in the found at least one file.

It should be noted that the folder may further include a subfolder. In this case, the subfolder is opened and at least one file in the subfolder is searched for until the folder includes no subfolder.

10331. Acquire the file information of the at least one file in the folder according to the at least one file in the folder.

The file information is one of properties of the file. In the service device, the user equipment can acquire the file information of the at least one file in the folder according to the at least one file in the folder.

10341. Select, from the at least one file in the folder according to the file information of the at least one file in the folder, a multimedia file corresponding to the multimedia type selection command.

The multimedia file corresponding to the multimedia type selection command is selected from the at least one file in the folder by using the file information of the at least one file in the folder. If the folder still includes a subfolder, the subfolder is opened, and a multimedia file corresponding to the multimedia type selection command is selected from at least one file in the subfolder according to file information of the at least one file in the subfolder, which goes on until the folder includes no subfolder.

In the multimedia display method provided in this embodiment of the present invention, user equipment can receive a multimedia type selection command; search for a service device in a specified range; determine a service device accessible with access permission, acquire a file directory from the service device accessible with access permission, and therefore, acquire file information of a file in the service device; select a multimedia file corresponding to the multimedia type selection command by using the file information; and generate and display a multimedia file list according to the multimedia file corresponding to the multimedia type selection command. In the prior art, a DLNA service device needs to be accessed repeatedly, and every time the DLNA service device is accessed, multiple commands of a user need to be received before a required multimedia file can be played. Compared with the prior art, in this solution, after receiving a multimedia type selection command, the user equipment traverses and accesses all found service devices accessible with access permission, generates and displays a multimedia file list according to a multimedia file that is corresponding to the multimedia type selection command and is in the service device, and displays found multimedia files at a time, thereby avoiding a problem of accessing the DLNA service device repeatedly, avoiding a need of receiving multiple commands of the user every time the DLNA service device is accessed, reducing time spent by the user equipment in searching for a multimedia file, and improving efficiency of searching for the multimedia file. When the file directory includes a folder, the folder is opened and a multimedia file corresponding to the multimedia type selection command is selected, thereby preventing omission of the multimedia file corresponding to the multimedia type selection command.

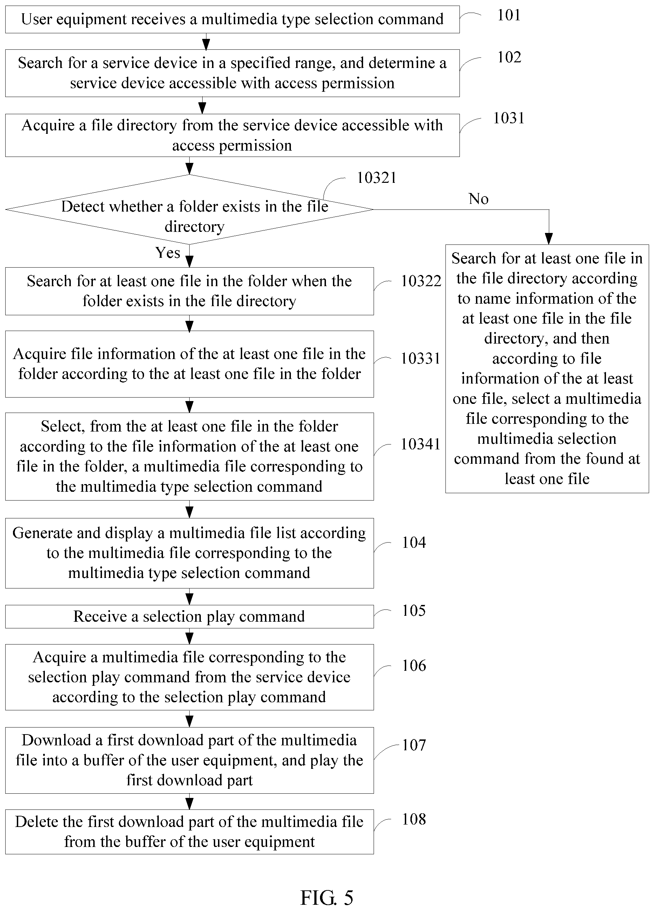

In addition, on the basis of the solution shown in FIG. 4, an embodiment of the present invention further provides a specific solution to a multimedia display method. In this solution, 105 to 108 may be added, and a multimedia file in a service device may be downloaded to user equipment and played. As shown in FIG. 5, the specific solution includes:
105. Receive a selection play command.

The selection play command is used to select a to-be-played multimedia file from the multimedia list.

106. Acquire a multimedia file corresponding to the selection play command from the service device according to the selection play command.

107. Download a first download part of the multimedia file into a buffer of the user equipment, and play the first download part.

The first download part may be set as a part in a preset time in the multimedia file, so as to enable the user equipment to implement a function of playing while downloading. For example, the multimedia file is a video file. When the video file is played to 1 minute, the user equipment needs only to download a part between 1 minute and 1 minute 30 seconds in the video file from the service device, and so on. A part to be downloaded in real time is always the part of 30 seconds after current time of playing the video. In this way, it can be avoided that an entire multimedia file is downloaded by the user into the user equipment, which occupies plenty of storage resources of a memory in the user equipment. The first download part may also be set as a part of a preset size in the multimedia file. For example, the first download part may be a part of a 10 M size that is to be played immediately in the multimedia file.

108. Delete the first download part of the multimedia file from the buffer of the user equipment.

After the first download part of the multimedia file is played, the first download part is deleted from a buffer of the user equipment in real time, thereby preventing an increase in a burden on the memory of the user equipment and reducing occupied storage resources.

In the multimedia display method provided in this embodiment of the present invention, user equipment can receive a multimedia type selection command; search for a service device in a specified range; determine a service device accessible with access permission, acquire a file directory from the service device accessible with access permission, and therefore, acquire file information of a file in the service device; select a multimedia file corresponding to the multimedia type selection command by using the file information; and generate and display a multimedia file list according to the multimedia file corresponding to the multimedia type selection command. When a multimedia file is played, it may be downloaded while being played, and a played part of the multimedia file may be deleted. In the prior art, a DLNA service device needs to be accessed repeatedly, and every time the DLNA service device is accessed, multiple commands of a user need to be received before a required multimedia file can be played. Compared with the prior art, in this solution, after receiving a multimedia type selection command, the user equipment traverses and accesses all found service devices accessible with access permission, generates and displays a multimedia file list according to a multimedia file that is corresponding to the multimedia type selection command and is in the service device, and displays found multimedia files at a time, thereby avoiding a problem of accessing the DLNA service device repeatedly, avoiding a need of receiving multiple commands of the user every time the DLNA service device is accessed, reducing time spent by the user equipment in searching for a multimedia file, and improving efficiency of searching for the multimedia file. In addition, in a process of playing, storage resources occupied in the user equipment are reduced maximally, and a storage burden on a memory of the user equipment is also relieved.

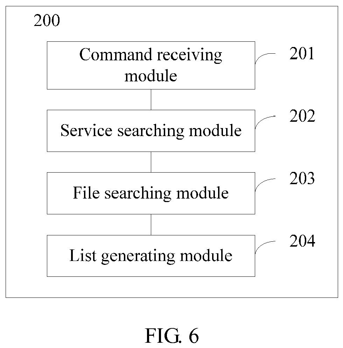

An embodiment of the present invention provides user equipment 200. As shown in FIG. 6, the user equipment 200 includes:
a command receiving module 201, configured to receive a multimedia type selection command;
a service searching module 202, configured to search for a service device in a specified range, and determine a service device accessible with access permission, where
the service device stores a multimedia file;
a file searching module 203, configured to search the service device accessible with access permission for a multimedia file corresponding to the multimedia type selection command; and
a list generating module 204, configured to generate and display a multimedia file list according to the multimedia file corresponding to the multimedia type selection command.

The multimedia list includes name information of the multimedia file corresponding to the multimedia type selection command.

The multimedia display apparatus provided in this embodiment of the present invention can receive a multimedia type selection command, search for a service device in a specified range, determine a service device accessible with access permission, search the service device accessible with access permission for a multimedia file corresponding to the multimedia type selection command, and generate and display a multimedia file list according to the multimedia file corresponding to the multimedia type selection command. In the prior art, a DLNA service device needs to be accessed repeatedly, and every time the DLNA service device is accessed, multiple commands of a user need to be received before a required multimedia file can be played. Compared with the prior art, in this solution, after receiving a multimedia type selection command, the apparatus traverses and accesses all found service devices accessible with access permission, generates and displays a multimedia file list according to a multimedia file that is corresponding to the multimedia type selection command and is in the service device, and displays found multimedia files at a time, thereby avoiding a problem of accessing the DLNA service device repeatedly, avoiding a need of receiving multiple commands of the user every time the DLNA service device is accessed, reducing time spent by the apparatus in searching for a multimedia file, and improving efficiency of searching for the multimedia file.

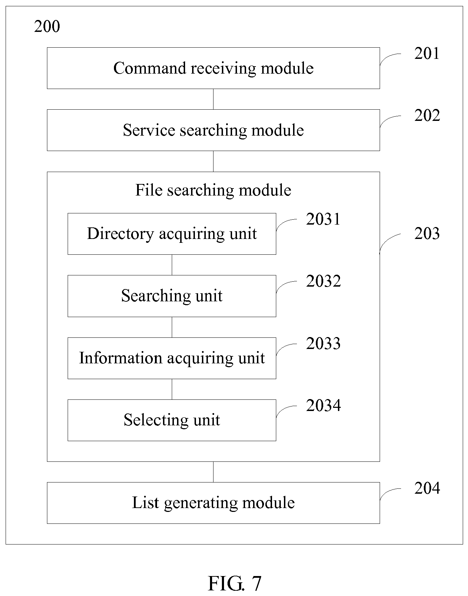

Further, as shown in FIG. 7, the file searching module 203 includes:
a directory acquiring unit 2031, configured to acquire a file directory from the service device accessible with access permission, where
the file directory includes name information of at least one file in the service device;
a searching unit 2032, configured to search for the at least one file according to the name information of the at least one file in the file directory;
an information acquiring unit 2033, configured to acquire file information of the at least one file according to the at least one file, where
the file information of the at least one file is used to distinguish a type of the at least one file; and
a selecting unit 2034, configured to select, from the at least one file according to the file information of the at least one file, the multimedia file corresponding to the multimedia type selection command.

The multimedia display apparatus provided in this embodiment of the present invention can receive a multimedia type selection command; search for a service device in a specified range; determine a service device accessible with access permission; acquire a file directory from the service device accessible with access permission, and therefore, acquire file information of a file in the service device; select a multimedia file corresponding to the multimedia type selection command by using the file information; and generate and display a multimedia file list according to the multimedia file corresponding to the multimedia type selection command. In the prior art, a DLNA service device needs to be accessed repeatedly, and every time the DLNA service device is accessed, multiple commands of a user need to be received before a required multimedia file can be played. Compared with the prior art, in this solution, after receiving a multimedia type selection command, the apparatus traverses and accesses all found service devices accessible with access permission, generates and displays a multimedia file list according to a multimedia file that is corresponding to the multimedia type selection command and is in the service device, and displays found multimedia files at a time, thereby avoiding a problem of accessing the DLNA service device repeatedly, avoiding a need of receiving multiple commands of the user every time the DLNA service device is accessed, reducing time spent by the apparatus in searching for a multimedia file, and improving efficiency of searching for the multimedia file.

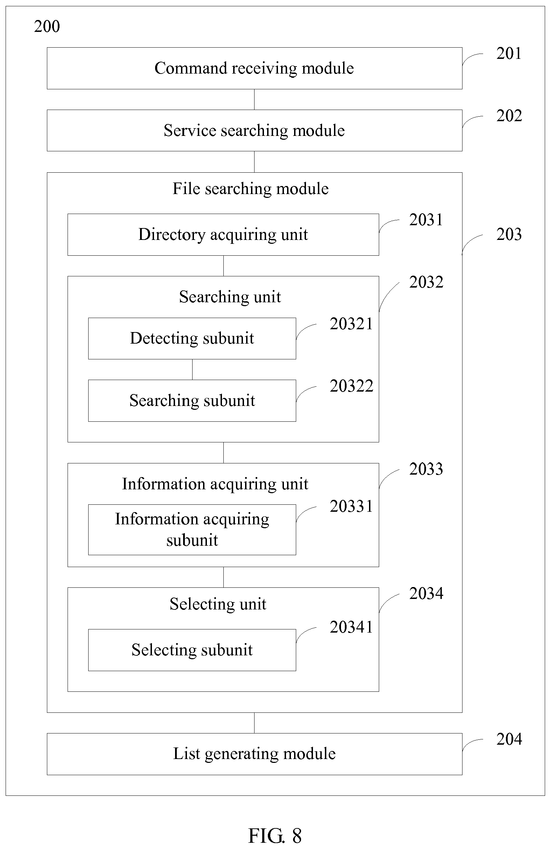

Still further, as shown in FIG. 8, the searching unit 2032 includes:
a detecting subunit 20321, configured to detect whether a folder exists in the file directory, where
the folder includes at least one file; and
a searching subunit 20322, configured to search for the at least one file in the folder when the folder exists in the file directory.

The information acquiring unit 2033 includes:
an information acquiring subunit 20331, configured to acquire the file information of the at least one file in the folder according to the at least one file in the folder.

The selecting unit 2034 includes:
a selecting subunit 20341, configured to select, from the at least one file in the folder according to the file information of the at least one file in the folder, the multimedia file corresponding to the multimedia type selection command.

The multimedia display apparatus provided in this embodiment of the present invention can receive a multimedia type selection command; search for a service device in a specified range; determine a service device accessible with access permission, acquire a file directory from the service device accessible with access permission, and therefore, acquire file information of a file in the service device; select a multimedia file corresponding to the multimedia type selection command by using the file information; and generate and display a multimedia file list according to the multimedia file corresponding to the multimedia type selection command. In the prior art, a DLNA service device needs to be accessed repeatedly, and every time the DLNA service device is accessed, multiple commands of a user need to be received before a required multimedia file can be played. Compared with the prior art, in this solution, after receiving a multimedia type selection command, the user equipment traverses and accesses all found service devices accessible with access permission, generates and displays a multimedia file list according to a multimedia file that is corresponding to the multimedia type selection command and is in the service device, and displays found multimedia files at a time, thereby avoiding a problem of accessing the DLNA service device repeatedly, avoiding a need of receiving multiple commands of the user every time the DLNA service device is accessed, reducing time spent by the user equipment in searching for a multimedia file, and improving efficiency of searching for the multimedia file. When the file directory includes a folder, the folder is opened and a multimedia file corresponding to the multimedia type selection command is selected, thereby preventing omission of the multimedia file corresponding to the multimedia type selection command.

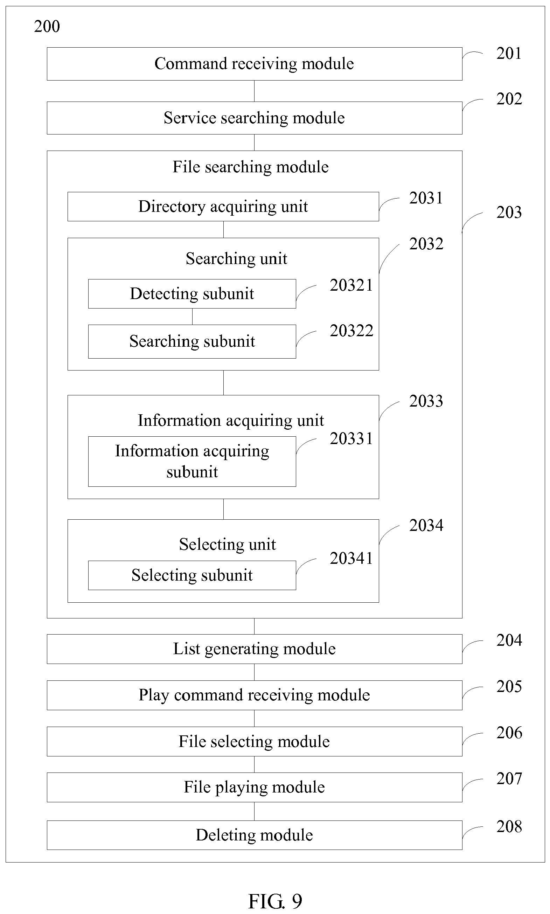

In addition, as shown in FIG. 9, the user equipment 200 further includes:
a play command receiving module 205, configured to receive a selection play command, where
the selection play command is used to select a to-be-played multimedia file from the multimedia list;
a file selecting module 206, configured to acquire a multimedia file corresponding to the selection play command from the service device according to the selection play command;
a file playing module 207, configured to: download a first download part of the multimedia file into a buffer of the user equipment, and play the first download part; and
a deleting module 208, configured to delete the first download part of the multimedia file from the buffer of the user equipment.

The multimedia display apparatus provided in this embodiment of the present invention can receive a multimedia type selection command; search for a service device in a specified range; determine a service device accessible with access permission; acquire a file directory from the service device accessible with access permission, and therefore, acquire file information of a file in the service device; select a multimedia file corresponding to the multimedia type selection command by using the file information; and generate and display a multimedia file list according to the multimedia file corresponding to the multimedia type selection command. When a multimedia file is played, it may be downloaded while being played, and a played part of the multimedia file may be deleted. In the prior art, a DLNA service device needs to be accessed repeatedly, and every time the DLNA service device is accessed, multiple commands of a user need to be received before a required multimedia file can be played. Compared with the prior art, in this solution, after receiving a multimedia type selection command, the apparatus traverses and accesses all found service devices accessible with access permission, generates and displays a multimedia file list according to a multimedia file that is corresponding to the multimedia type selection command and is in the service device, and displays found multimedia files at a time, thereby avoiding a problem of accessing the DLNA service device repeatedly, avoiding a need of receiving multiple commands of the user every time the DLNA service device is accessed, reducing time spent by the apparatus in searching for a multimedia file, and improving efficiency of searching for the multimedia file. In addition, in a process of playing, storage resources occupied in the apparatus are reduced maximally, and a storage burden on a memory of the apparatus is also relieved.

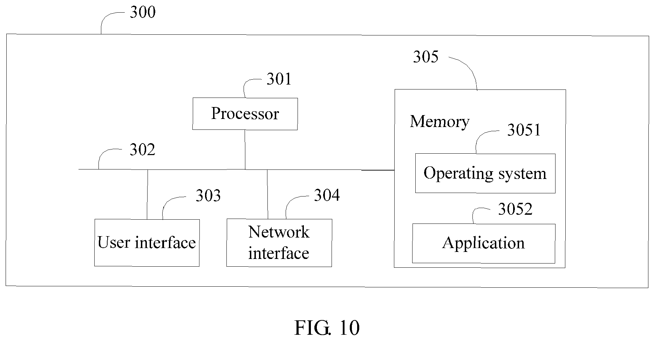

An embodiment of the present invention provides a multimedia display device 300. As shown in FIG. 10, the multimedia display device 300 includes at least one processor 301 such as a CPU (Central Processing Unit, central processing unit), at least one network interface 304 or another user interface 303, a memory 305, and at least one communications bus 302. The communications bus 302 is used to implement connection and communication between these components. Optionally, the user interface 303 may be a display, a keyboard or a click device such as a mouse, a trackball, a touchpad or a touchscreen. Optionally, the memory 305 may include at least one storage apparatus located far away from the processor 301, such as a read-only memory (Read-Only Memory, ROM) or a random access memory (Random Access Memory, RAM); and the multimedia display device 300 may be specifically a vehicle-mounted play device or a home play device such as a vehicle-mounted player or a smart television.

In some implementation manners, the memory 305 stores the following elements, an executable module or a data structure, or a subset thereof, or an extension set thereof:
an operating system 3051, including various system programs, and configured to implement various basic services and handle hardware-based tasks; and
an application 3052, including various applications, and configured to implement various application services.

The application 3052 includes but is not limited to a command receiving module 201, a service searching module 202, a file searching module 203, a list generating module 204, a directory acquiring unit 2031, a searching unit 2032, an information acquiring unit 2033, a selecting unit 2034, a detecting subunit 20321, a searching subunit 20322, an information acquiring subunit 20331, a selecting subunit 20341, a play command receiving module 205, a file selecting module 206, a file playing module 207, and a deleting module 208.

For specific implementation of each module and each unit in the application 3052, reference may be made to corresponding modules and units in the embodiments shown in FIG. 6 to FIG. 9, and details are not described herein again. The processor 301 may acquire data such as the operating system 3051 and the application 3052 from the memory 305, so that the processor 301 runs or executes the data such as the operating system 3051 and the application 3052.

Specifically, the user interface 303 is configured to receive a multimedia type selection command.

The processor 301 is configured to: search for a service device in a specified range, and determine a service device accessible with access permission, where the service device stores a multimedia file; configured to search the service device accessible with access permission for a multimedia file corresponding to the multimedia type selection command; and configured to generate and display a multimedia file list according to the multimedia file corresponding to the multimedia type selection command, where the multimedia list includes name information of the multimedia file corresponding to the multimedia type selection command.

The memory 305 is configured to store the multimedia type selection command and the multimedia file list.

Further, the processor 301 is further configured to acquire a file directory from the service device accessible with access permission, where the file directory includes name information of at least one file in the service device; configured to search for the at least one file according to the name information of the at least one file in the file directory; configured to acquire file information of the at least one file according to the at least one file, where the file information of the at least one file is used to distinguish a type of the at least one file; and configured to select, from the at least one file according to the file information of the at least one file, the multimedia file corresponding to the multimedia type selection command.

Still further, the processor 301 is further configured to: detect whether a folder exists in the file directory, where the folder includes at least one file, and search for the at least one file in the folder when the folder exists in the file directory; configured to acquire the file information of the at least one file in the folder according to the at least one file in the folder; and configured to select, from the at least one file in the folder according to the file information of the at least one file in the folder, the multimedia file corresponding to the multimedia type selection command.

In addition, the user interface 303 is further configured to receive a selection play command.

The selection play command is used to select a to-be-played multimedia file from the multimedia list.

The processor 301 is further configured to: acquire a multimedia file corresponding to the selection play command from the service device according to the selection play command; and download a first download part of the multimedia file into a buffer of the user equipment, and play the first download part.

The processor 301 is further configured to delete the first download part of the multimedia file from the buffer of the user equipment.

The multimedia display device provided in this embodiment of the present invention can receive a multimedia type selection command; search for a service device in a specified range; determine a service device accessible with access permission; acquire a file directory from the service device accessible with access permission, and therefore, acquire file information of a file in the service device; select a multimedia file corresponding to the multimedia type selection command by using the file information; and generate and display a multimedia file list according to the multimedia file corresponding to the multimedia type selection command. When a multimedia file is played, it may be downloaded while being played, and a played part of the multimedia file may be deleted. In the prior art, a DLNA service device needs to be accessed repeatedly, and every time the DLNA service device is accessed, multiple commands of a user need to be received before a required multimedia file can be played. Compared with the prior art, in this solution, after receiving a multimedia type selection command, the multimedia display device traverses and accesses all found service devices accessible with access permission, generates and displays a multimedia file list according to a multimedia file that is corresponding to the multimedia type selection command and is in the service device, and displays found multimedia files at a time, thereby avoiding a problem of accessing the DLNA service device repeatedly, avoiding a need of receiving multiple commands of the user every time the DLNA service device is accessed, reducing time spent by the multimedia display device in searching for a multimedia file, and improving efficiency of searching for the multimedia file. When the file directory includes a folder, the folder is opened to acquire a multimedia file, thereby preventing omission of a multimedia file corresponding to the multimedia type selection command. In addition, in a process of playing, storage resources occupied in the multimedia display device are reduced maximally, and a storage burden on a memory of the multimedia display device is also relieved.

The embodiments in this specification are all described in a progressive manner, for same or similar parts in the embodiments, reference may be made to these embodiments, and each embodiment focuses on a difference from other embodiments. Especially, a device embodiment is basically similar to a method embodiment, and therefore is described briefly; for related parts, reference may be made to partial descriptions in the method embodiment.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The storage medium may include: a magnetic disk, an optical disc, a read-only memory (Read-Only Memory, ROM), or a random access memory (Random Access Memory, RAM).

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A multimedia display method, comprising:
receiving (101), by user equipment (200), a multimedia type selection command;
after receiving a multimedia type selection command, searching (102), by the user equipment (200), for service devices in a specified range, where the specified range is a range in which the user equipment (200) can communicate with the service devices, and traversing and accessing, by the user equipment (200), all found service devices accessible with access permission, wherein each service device stores at least one multimedia file;
searching (103) the service devices accessible with access permission for all multimedia files corresponding to the multimedia type selection command;
generating and displaying (104) a multimedia file list according to the multimedia files corresponding to the multimedia type selection command, wherein the multimedia list comprises name information of the multimedia files corresponding to the multimedia type selection command;
receiving (105) a selection play command, wherein the selection play command is used to select a to-be-played multimedia file from the multimedia list;
acquiring (106) a multimedia file corresponding to the selection play command from the service device according to the selection play command;
downloading (107) a first download part of the multimedia file into a buffer of the user equipment (200), and playing the first download part while downloading; and
after the first download part of the multimedia file is played, deleting (108) the first download part of the multimedia file from the buffer of the user equipment (200).

2. The method according to claim 1, wherein the searching (103) the service devices accessible with access permission for all multimedia file corresponding to the multimedia type selection command is specifically:
acquiring (1031) a file directory from each service device accessible with access permission, wherein the file directory comprises name information of at least one file in the service device;
searching (1032) for the at least one file according to the name information of the at least one file in the file directory;
acquiring (1033) file information of the at least one file according to the at least one file, wherein the file information of the at least one file is used to distinguish a type of the at least one file; and
selecting (1034), from the at least one file according to the file information of the at least one file, the multimedia file corresponding to the multimedia type selection command.

3. The method according to claim 2, wherein the searching (1032) for the at least one file specifically comprises:
detecting (10321) whether a folder exists in the file directory, wherein the folder comprises at least one multimedia file; and,
when a folder exists, opening the folder and searching (10322) for at least one file corresponding to the multimedia type selection command in the folder;
the acquiring (1033) file information of the at least one file according to the at least one file specifically comprises:
acquiring (10331) the file information of the at least one file in the folder according to the at least one file in the folder corresponding to the multimedia type selection command; and
the selecting (1034), from the at least one file according to the file information of the at least one file, the multimedia file corresponding to the multimedia type selection command specifically comprises:
selecting (10341), from the at least one file in the folder according to the file information of the at least one file in the folder, the multimedia file corresponding to the multimedia type selection command.

4. The method according to any one of claims 1 to 3, wherein the user equipment (200) is an in-car system on which a DLNA, Digital Living Network Alliance, client is installed.

5. The method according to claim 4, wherein the service devices comprise at least one of a mobile phone, a tablet computer, and a notebook computer.

6. A multimedia display device (300), comprising at least a processor (301) and a user interface (303), wherein
the user interface (303) is configured to receive a multimedia type selection command; and
the processor (301) is configured to: after receiving a multimedia type selection command, search for service devices in a specified range, where the specified range is a range in which the user equipment can communicate with the service devices, and traverse and access all found service devices accessible with access permission, wherein each service device stores at least one multimedia file; configured to search the service devices accessible with access permission for all multimedia files corresponding to the multimedia type selection command; and configured to generate and display a multimedia file list according to the multimedia files corresponding to the multimedia type selection command, wherein the multimedia list comprises name information of the multimedia file corresponding to the multimedia type selection command;
the user interface (303) is further configured to receive a selection play command, wherein the selection play command is used to select a to-be-played multimedia file from the multimedia list; and
the processor (301) is further configured to: acquire a multimedia file corresponding to the selection play command from the service device according to the selection play command; download a first download part of the multimedia file into a buffer of the user equipment, and play the first download part while downloading; and to delete the first download part of the multimedia file from the buffer of the user equipment after the first download part of the multimedia file is played.

7. The device (300) according to claim 6, wherein the processor (301) is further configured to acquire a file directory from each service device accessible with access permission, wherein the file directory comprises name information of at least one file in the service device; configured to search for the at least one file according to the name information of the at least one file in the file directory; configured to acquire file information of the at least one file according to the at least one file, wherein the file information of the at least one file is used to distinguish a type of the at least one file; and configured to select, from the at least one file according to the file information of the at least one file, the multimedia file corresponding to the multimedia type selection command.

8. The device (300) according to claim 7, wherein the processor (301) is further configured to: detect whether a folder exists in the file directory, wherein the folder comprises at least one multimedia file, and, when a folder exists, open the folder and search for at least one file corresponding to the multimedia type selection command in the folder; configured to acquire the file information of the at least one file in the folder according to the at least one file in the folder corresponding to the multimedia type selection command; and configured to select, from the at least one file in the folder according to the file information of the at least one file in the folder, the multimedia file corresponding to the multimedia type selection command.

## Patentansprüche

1. Multimediaanzeigeverfahren, aufweisend:
Empfangen (101), durch eine Anwenderausrüstung (200), eines Multimediatypauswahlbefehls;
nach Empfangen eines Multimediatypauswahlbefehls, Suchen (102), durch die Anwenderausrüstung (200), nach Dienstvorrichtungen in einer spezifischen Spanne, wo die spezifische Spanne eine Spanne ist, in der die Anwenderausrüstung (200) mit den Dienstvorrichtungen kommunizieren kann, und, durch die Anwenderausrüstung (200), Durchqueren von und Zugreifen auf alle(n) gefundenen Dienstvorrichtungen, die mit Zugrifferlaubnis zugänglich sind, wobei jede Dienstvorrichtung mindestens eine Multimediadatei speichert;
Durchsuchen (103) der Dienstvorrichtungen, die mit Zugriffserlaubnis zugänglich sind, nach allen Multimediadateien entsprechend dem Multimediatypauswahlbefehl;
Erzeugen und Anzeigen (104) einer Multimediadateiliste gemäß den Multimediadateien, entsprechend dem Multimediatypauswahlbefehl, wobei die Multimedialiste Namensinformationen der Multimediadateien entsprechend dem Multimediatypauswahlbefehl aufweist;
Empfangen (105) eines Auswahlabspielbefehls, wobei der Auswahlabspielbefehl verwendet wird, um eine abzuspielende Multimediadatei aus der Multimedialiste auszuwählen;
Beschaffen (106) einer Multimediadatei, entsprechend dem Auswahlabspielbefehls von der Dienstvorrichtung gemäß dem Auswahlabspielbefehl;
Herunterladen (107) eines ersten Herunterladeteils der Multimediadatei in einen Puffer der Anwenderausrüstung (200) und Abspielen des ersten Herunterladeteils während eines Herunterladens; und
nachdem der erste Herunterladeteil der Multimediadatei abgespielt worden ist, Löschen (108) des ersten Herunterladeteils der Multimediadatei aus dem Puffer der Anwenderausrüstung (200).

2. Verfahren nach Anspruch 1, wobei das Durchsuchen (103) der Dienstvorrichtungen, die mit Zugriffserlaubnis zugänglich sind, nach allen Multimediadateien entsprechend dem Multimediatypauswahlbefehl spezifisch dient zum:
Beschaffen (1031) eines Dateiverzeichnisses von jeder Dienstvorrichtung, die mit Zugriffserlaubnis zugänglich ist, wobei das Dateiverzeichnis Nameninformationen mindestens einer Datei in der Dienstvorrichtung aufweist;
Suchen (1032) nach der mindestens einen Datei gemäß den Nameninformationen der mindestens einen Datei im Dateiverzeichnis;
Beschaffen (1033) von Dateiinformationen der mindestens einen Datei gemäß der mindestens einen Datei, wobei die Dateiinformationen der mindestens einen Datei verwendet werden, um einen Typ der mindestens einen Datei zu unterscheiden; und
Auswählen (1034), aus der mindestens einen Datei gemäß den Dateiinformationen der mindestens einen Datei, der Multimediadatei entsprechend dem Multimediatypauswahlbefehl.

3. Verfahren nach Anspruch 2, wobei das Suchen (1032) nach der mindestens einen Datei spezifisch aufweist:
Erfassen (10321), ob ein Ordner im Dateiverzeichnis besteht, wobei der Ordner mindestens eine Multimediadatei aufweist; und
wenn ein Ordner besteht, Öffnen des Ordners und Suchen (10322) nach mindestens einer Datei entsprechend dem Multimediatypauswahlbefehl im Ordner;
das Beschaffen (1033) von Dateiinformationen der mindestens einen Datei gemäß der mindestens einen Datei spezifisch aufweist:
Beschaffen (10331) der Dateiinformationen der mindestens einen Datei im Ordner gemäß der mindestens einen Datei im Ordner entsprechend dem Multimediatypauswahlbefehl; und
das Auswählen (1034), aus der mindestens einen Datei gemäß der Dateiinformationen der mindestens einen Datei, der Multimediadatei, die dem Multimediatypauswahlbefehl entspricht, spezifisch aufweist:
Auswählen (10341), aus der mindestens einen Datei im Ordner gemäß den Dateiinformationen der mindestens einen Datei im Ordner, der Multimediadatei entsprechend dem Multimediatypauswahlbefehl.

4. Verfahren nach einem der Ansprüche 1 bis 3, wobei die Anwenderausrüstung (200) ein Auto-System ist, auf dem ein DLNA, Digital Living Network Alliance, Client installiert ist.

5. Verfahren nach Anspruch 4, wobei die Dienstvorrichtungen mindestens eines von einem Mobiltelefon, einem Tabletcomputer und einem Notebookcomputer aufweisen.

6. Multimediaanzeigevorrichtung (300), aufweisend mindestens einen Prozessor (301) und eine Anwenderschnittstelle (303), wobei
die Anwenderschnittstelle (303) konfiguriert ist, einen Multimediatypauswahlbefehl zu empfangen; und
der Prozessor (301) konfiguriert ist zum: nach Empfangen eines Multimediatypauswahlbefehls, Suchen nach Dienstvorrichtungen in einer spezifischen Spanne, wo die spezifische Spanne in einer Spanne ist, in der die Anwenderausrüstung mit den Dienstvorrichtungen kommunizieren kann, und Durchqueren von und Zugreifen auf alle(n) gefundenen Dienstvorrichtungen, die mit Zugriffserlaubnis zugänglich sind, wobei jede Dienstvorrichtung mindestens eine Multimediadatei speichert; konfiguriert ist, die Dienstvorrichtungen, die mit Zugriffserlaubnis zugänglich sind, nach allen Multimediadateien entsprechend dem Multimediatypauswahlbefehl zu durchsuchen; und konfiguriert ist, eine Multimediadateiliste gemäß den Multimediadateien entsprechend dem Multimediatypauswahlbefehl zu erzeugen und anzuzeigen, wobei die Multimedialiste Nameninformationen der Multimediadatei entsprechend dem Multimediatypauswahlbefehl aufweist;
die Anwenderschnittstelle (303) ferner konfiguriert ist, einen Auswahlabspielbefehl zu empfangen, wobei der Auswahlabspielbefehl verwendet wird, eine abzuspielende Multimediadatei aus der Multimedialiste auszuwählen; und
der Prozessor (301) ferner konfiguriert ist zum: Beschaffen einer Multimediadatei entsprechend dem Auswahlabspielbefehl von der Dienstvorrichtung gemäß dem Auswahlabspielbefehl; Herunterladen eines ersten Herunterladeteils der Multimediadatei in einen Puffer der Anwenderausrüstung und Abspielen des ersten Herunterladeteils während eines Herunterladens; und zum Löschen des ersten Herunterladeteils der Multimediadatei aus dem Puffer der Anwenderausrüstung nachdem der erste Herunterladeteil der Multimediadatei abgespielt worden ist.

7. Vorrichtung (300) nach Anspruch 6, wobei der Prozessor (301) ferner konfiguriert ist, ein Dateiverzeichnis von jeder Dienstvorrichtung zu beschaffen, die mit Zugriffserlaubnis zugänglich ist, wobei das Dateiverzeichnis Nameninformationen von mindestens einer Datei in der Dienstvorrichtung aufweist; konfiguriert ist, gemäß den Nameninformationen der mindestens einen Datei im Dateiverzeichnis nach der mindestens einen Datei zu suchen; konfiguriert ist, Dateiinformationen der mindestens einen Datei gemäß der mindestens einen Datei zu suchen, wobei die Dateiinformationen der mindestens einen Datei verwendet werden, einen Typ der mindestens einen Datei zu unterscheiden; und konfiguriert ist, aus der mindestens einen Datei gemäß der Dateiinformationen der mindestens einen Datei die Multimediadatei entsprechend dem Multimediatypauswahlbefehl auszuwählen.

8. Vorrichtung (300) nach Anspruch 7, wobei der Prozessor (301) ferner konfiguriert ist zum: Erfassen, ob ein Ordner im Dateiverzeichnis besteht, wobei der Ordner mindestens eine Multimediadatei aufweist und, wenn ein Ordner besteht, Öffnen des Ordners und Suchen nach mindestens einer Datei, entsprechend dem Multimediatypauswahlbefehl im Ordner; konfiguriert ist, die Dateiinformationen der mindestens einen Datei im Ordner gemäß der mindestens einen Datei im Ordner entsprechend dem Multimediatypauswahlbefehl zu beschaffen; und konfiguriert ist, aus der mindestens einen Datei im Ordner, gemäß den Dateiinformationen der mindestens einen Datei im Ordner, die Multimediadatei entsprechend dem Multimediatypauswahlbefehl auszuwählen.

## Revendications

1. Procédé d'affichage multimédia consistant :
à recevoir (101), au moyen d'un équipement utilisateur (200), une instruction de sélection de type multimédia ;
après la réception d'une instruction de sélection de type multimédia, à rechercher (102), au moyen de l'équipement utilisateur (200), des dispositifs de service dans une plage spécifiée, où la plage spécifiée est une plage dans laquelle l'équipement utilisateur (200) peut communiquer avec les dispositifs de service, et à traverser et à accéder, au moyen de l'équipement utilisateur (200), à tous les dispositifs de service trouvés accessibles avec une autorisation d'accès, dans lequel chaque dispositif de service stocke au moins un fichier multimédia ;
à rechercher (103) les dispositifs de service accessibles avec une autorisation d'accès pour tous les fichiers multimédias correspondant à l'instruction de sélection de type multimédia ;
à générer et à afficher (104) une liste de fichiers multimédias en fonction des fichiers multimédias correspondant à l'instruction de sélection de type multimédia, dans lequel la liste multimédia comporte des informations de nom des fichiers multimédias correspondant à l'instruction de sélection de type multimédia ;
à recevoir (105) une instruction de lecture de sélection, dans lequel l'instruction de lecture de sélection est utilisée pour sélectionner un fichier multimédia à lire dans la liste multimédia ;
à acquérir (106) un fichier multimédia correspondant à l'instruction de lecture de sélection à partir du dispositif de service en fonction de l'instruction de lecture de sélection ;
à télécharger (107) une première partie de téléchargement du fichier multimédia dans une mémoire tampon de l'équipement utilisateur (200) et à lire la première partie de téléchargement tout en téléchargeant ; et
après que la première partie de téléchargement du fichier multimédia est lue, à supprimer (108) la première partie de téléchargement du fichier multimédia de la mémoire tampon de l'équipement utilisateur (200).

2. Procédé selon la revendication 1, dans lequel la recherche (103) des dispositifs de service accessibles avec une autorisation d'accès pour tous les fichiers multimédias correspondant à l'instruction de sélection de type multimédia consiste spécifiquement :
à acquérir (1031) un répertoire de fichiers à partir de chaque dispositif de service accessible avec une autorisation d'accès, dans lequel le répertoire de fichiers comporte des informations de nom d'au moins un fichier dans le dispositif de service ;
à rechercher (1032) le ou les fichiers en fonction des informations de nom du ou des fichiers dans le répertoire de fichiers ;
à acquérir (1033) des informations de fichier du ou des fichiers en fonction du ou des fichiers, dans lequel les informations de fichier du ou des fichiers sont utilisées pour distinguer un type du ou des fichiers ; et
à sélectionner (1034), à partir du ou des fichiers en fonction des informations de fichier du ou des fichiers, le fichier multimédia correspondant à l'instruction de sélection de type multimédia.

3. Procédé selon la revendication 2, dans lequel la recherche (1032) du ou des fichiers consiste spécifiquement :
à détecter (10321) si un dossier existe ou non dans le répertoire de fichiers, dans lequel le dossier comprend au moins un fichier multimédia ; et
lorsqu'un dossier existe, à ouvrir le dossier et à rechercher (10322) au moins un fichier correspondant à l'instruction de sélection de type multimédia dans le dossier ;
l'acquisition (1033) d'informations de fichier du ou des fichiers en fonction du ou des fichiers consiste spécifiquement :
à acquérir (10331) les informations de fichier du ou des fichiers dans le dossier en fonction du ou des fichiers dans le dossier correspondant à l'instruction de sélection de type multimédia ; et
la sélection (1034), à partir du ou des fichiers en fonction des informations de fichier du ou des fichiers, du fichier multimédia correspondant à l'instruction de sélection de type multimédia consiste spécifiquement :
à sélectionner (10341), à partir du ou des fichiers dans le dossier en fonction des informations de fichier du ou des fichiers dans le dossier, le fichier multimédia correspondant à l'instruction de sélection de type multimédia.

4. Procédé selon l'une quelconque des revendications 1 à 3, dans lequel l'équipement utilisateur (200) est un système embarqué sur lequel un client d'alliance de réseau vivant numérique (DLNA) est installé.

5. Procédé selon la revendication 4, dans lequel les dispositifs de service comprennent un téléphone mobile et/ou une tablette numérique et/ou un ordinateur bloc-notes.

6. Dispositif d'affichage multimédia (300) comprenant au moins un processeur (301) et une interface utilisateur (303), dans lequel
l'interface utilisateur (303) est configurée pour recevoir une instruction de sélection de type multimédia ; et
le processeur (301) est configuré : après la réception d'une instruction de sélection de type multimédia, pour rechercher des dispositifs de service dans une plage spécifiée, où la plage spécifiée est une plage dans laquelle l'équipement utilisateur peut communiquer avec les dispositifs de service, et pour traverser et pour accéder à tous les dispositifs de service trouvés accessibles avec une autorisation d'accès, dans lequel chaque dispositif de service stocke au moins un fichier multimédia ; configuré pour rechercher les dispositifs de service accessibles avec une autorisation d'accès pour tous les fichiers multimédias correspondant à l'instruction de sélection de type multimédia ; et configuré pour générer et pour afficher une liste de fichiers multimédias en fonction des fichiers multimédias correspondant à l'instruction de sélection de type multimédia, dans lequel la liste multimédia comporte des informations de nom du fichier multimédia correspondant à l'instruction de sélection de type multimédia ;
l'interface utilisateur (303) est en outre configurée pour recevoir une instruction de lecture de sélection, dans lequel l'instruction de lecture de sélection est utilisée pour sélectionner un fichier multimédia à lire dans la liste multimédia ; et
le processeur (301) est en outre configuré : pour acquérir un fichier multimédia correspondant à l'instruction de lecture de sélection à partir du dispositif de service en fonction de l'instruction de lecture de sélection ; pour télécharger une première partie de téléchargement du fichier multimédia dans une mémoire tampon de l'équipement utilisateur et pour lire la première partie de téléchargement tout en téléchargeant ; et pour supprimer la première partie de téléchargement du fichier multimédia de la mémoire tampon de l'équipement utilisateur après que la première partie de téléchargement du fichier multimédia est lue.

7. Dispositif (300) selon la revendication 6, dans lequel le processeur (301) est en outre configuré pour acquérir un répertoire de fichiers à partir de chaque dispositif de service accessible avec une autorisation d'accès, dans lequel le répertoire de fichiers comporte des informations de nom d'au moins un fichier dans le dispositif de service ; configuré pour rechercher le ou les fichiers en fonction des informations de nom du ou des fichiers dans le répertoire de fichiers ; configuré pour acquérir des informations de fichier du ou des fichiers en fonction du ou des fichiers, dans lequel les informations de fichier du ou des fichiers sont utilisées pour distinguer un type du ou des fichiers ; et configuré pour sélectionner, à partir du ou des fichiers en fonction des informations de fichier du ou des fichiers, le fichier multimédia correspondant à l'instruction de sélection de type multimédia.

8. Dispositif (300) selon la revendication 7, dans lequel le processeur (301) est en outre configuré : pour détecter si un dossier existe ou non dans le répertoire de fichiers, dans lequel le dossier comprend au moins un fichier multimédia et, lorsqu'un dossier existe, pour ouvrir le dossier et pour rechercher au moins un fichier correspondant à l'instruction de sélection de type multimédia dans le dossier ; configuré pour acquérir les informations de fichier du ou des fichiers dans le dossier en fonction du ou des fichiers dans le dossier correspondant à l'instruction de sélection de type multimédia ; et configuré pour sélectionner, à partir du ou des fichiers dans le dossier en fonction des informations de fichier du ou des fichiers dans le dossier, le fichier multimédia correspondant à l'instruction de sélection de type multimédia.
